# EUROPEAN PATENT APPLICATION

(11) **EP 4 706 844 A1**
(43) Date of publication of application: **11.03.2026**
(21) Application number: 25193054.1
(22) Date of filing: 31.07.2025
(51) Int. Cl.: B21D 37/20

(54) **METHOD OF MANUFACTURING ELECTRODE NOTCHING MOLD FOR SECONDARY BATTERY THROUGH GRINDING PROCESSING**

(30) Priority: 06.09.2024 KR 20240121458
(71) Applicant: GSPCompany Co., Ltd., Cheonan-si, Chungcheongnam-do 31026 (KR)
(72) Inventor: WOO, Sun Hark, 31026 Chungcheongnam-do (KR)
(74) Representative: Acapo Onsagers AS

(57) **Abstract**

Provided is a method of manufacturing a film notching mold (10) for a secondary battery pouch. The method includes processing each of an upper plate (101), a lower plate (102), a plurality of paired upper modules (130), a plurality of paired lower modules (140), a rounded press-fit plate (120), and an interference-fit portion (110) in a polyhedral frame shape in the form of a metal plate, coupling each of the upper plate (101), the lower plate (102), the plurality of paired upper modules (130), the plurality of paired lower modules (140), the rounded press-fit plate (120), and the interference-fit portion (110) by interference-fit, and performing linear driving-type pressing by forming a press-fit space.

## Description

### CROSS-REFERENCE TO RELATED APPLICATIONS

This application claims the benefit of Korean Patent Application No. 10-2024-0121458, filed on September 6, 2024, in the Korean Intellectual Property Office, the entire disclosure of which is incorporated herein by reference for all purposes.

### BACKGROUND

### 1. Field of the Invention

One or more embodiments relate to a method of manufacturing an electrode notching mold for a secondary battery through grinding processing.

### 2. Description of the Related Art

A pouch-type film for a secondary battery is widely used for lightweight and high efficiency, and precise cut work is essential to form an electrode tab in such a film. A notching mold is used to perform such cut work and plays an important role in forming an electrode tab by precisely cutting a specific portion of a film. However, an existing notching mold is mainly manufactured by a wire cutting method, which has the problem in that the dimensional precision of a mold is relatively low, making it difficult to ensure precise cutting of a film in forming an electrode tab.

Grinding processing is attracting attention as a solution to this problem. Grinding processing is technology that may process a metal surface extremely flatly and precisely and has the advantage of achieving dimensional precision at the micrometer level. This technology may control even minor errors on surfaces, making it suitable for processing components that require high precision. However, an existing notching mold is mainly designed as an integral structure and has structural limitations that make it difficult to apply grinding processing due to the characteristics of forming a cut surface on the inner cross-section.

Therefore, to overcome these limitations, new technology that may manufacture a notching mold by a grinding processing method is needed. Through this, high-precision cutting is possible in the process of forming an electrode tab of a film for a secondary battery pouch, thereby greatly improving the performance and reliability of a secondary battery.

The above description is information the inventor(s) acquired during the course of conceiving the present disclosure, or already possessed at the time, and was not necessarily publicly known before the present application was filed.

### SUMMARY

Embodiments provide a method of manufacturing an electrode notching mold for a secondary battery through grinding processing, which may manufacture a notching mold by a grinding processing method.

The technical tasks obtainable from the present disclosure are non-limited by the above-mentioned technical tasks. And, other unmentioned technical tasks can be clearly understood from the following description by those having ordinary skill in the technical field to which the present disclosure pertains.

According to an aspect, there is provided a method of manufacturing an electrode notching mold for a secondary battery through grinding processing, the method including manufacturing an upper plate and a lower plate by processing a plurality of plates in the form of a metal plate, manufacturing a plurality of paired upper modules and a plurality of paired lower modules by processing a plurality of metal plates into modules in the form of separate notching molds, manufacturing a press-fit plate by rounding a metal plate, manufacturing a plurality of interference-fit portions in a polyhedral frame shape by processing metal bloom, forming, in a lower portion of each of the plurality of paired upper modules, a plurality of upper grooves to which upper cross-sections of the plurality of interference-fit portions are coupled by interference-fit, forming, on both ends of the press-fit plate, respectively, a plurality of side surface grooves to which side surface cross-sections of the plurality of interference-fit portions are coupled by interference-fit, forming a plurality of cut portions in a blade shape by grinding one surface of each of the plurality of paired lower modules in a state in which the plurality of paired lower modules is separated, module-coupling in which a press-fit space is formed by a spaced distance by coupling the plurality of paired upper modules to a lower surface of the upper plate to be spaced apart from and face each other and coupling the plurality of paired lower modules to an upper surface of the lower plate to be spaced apart from and face each other, coupling by interference-fit an upper portion of each of the plurality of interference-fit portions to each of the plurality of upper grooves and coupling by interference-fit a side surface of each of the plurality of interference-fit portions to each of the plurality of side surface grooves, providing a plurality of ascending-descending portions that is linearly driven between the upper plate and the lower plate in a state in which the upper plate and the lower plate are spaced apart from and facing each other, guide portion-coupling in which one end of a plurality of guide portions having a pillar shape is coupled to each of the plurality of paired lower modules and another end of each of the plurality of guide portions penetrates each of the plurality of paired upper modules, and installing a pressing portion formed as a linear driving body on the press-fit plate so that the press-fit plate ascends or descends in the press-fit space.

The forming of the plurality of side surface grooves may include forming the plurality of side surface grooves in a flattened U shape that is recessed in a direction of a central axis of the press-fit plate.

The forming of the plurality of cut portions may include forming each of the plurality of cut portions to have a width and a height smaller than each of films and cutting a portion of the films, except for an electrode tab area.

The method may further include, by providing a plurality of cutting guide members on a lower side of each of the plurality of cut portions in the plurality of paired lower modules, providing a cutting guide member in which a cutting space where a cut film descends to each of the plurality of cutting guide members is formed.

The pressing portion may include a film support protruding from the press-fit plate toward the lower plate, in which the film support may have a frame shape with a height corresponding to the minimum distance between the press-fit plate and the lower plate.

According to an aspect, there is provided an electrode notching mold for a secondary battery through grinding processing, the electrode notching mold including a cover portion including an upper plate in a plate shape and a lower plate spaced apart from and facing the upper plate, an interference-fit portion in a polyhedral frame shape, a press-fit plate manufactured by rounding a metal plate and having, on both ends of the press-fit plate, respectively, a plurality of side surface grooves to which a side cross-section of the interference-fit portion is coupled by interference-fit, a plurality of upper modules coupled to the upper plate, spaced apart from and facing each other, and having a plate shape in which a plurality of upper grooves to which an upper cross-section of the interference-fit portion is coupled by interference-fit is formed in a lower portion of the plurality of upper modules, a plurality of lower modules coupled in parallel to each of the plurality of upper modules in the lower plate and configured to form a press-fit space between the plurality of lower modules and the plurality of upper modules, a plurality of cut portions respectively formed on facing surfaces of each of the plurality of lower modules by grinding and having an edge shape of a cutting blade, a plurality of ascending-descending portions formed to be driven linearly and provided between the upper plate and the lower plate such that a driving direction is perpendicular to an upper surface of the lower plate, a plurality of guide portions having a pillar shape, having one end provided in each of the plurality of lower modules, and having the other end penetrating each of the plurality of upper modules, and a pressing portion provided in the upper plate and configured to press-fit films to the upper surface of the lower plate while descending toward the press-fit space.

The press-fit plate may be configured to form the plurality of side surface grooves in a flattened U shape that is recessed in a direction of a central axis of the press-fit plate.

Each of the plurality of cut portions may be formed to have a width and a height smaller than each of the films and configured to cut a portion of the films, except for an electrode tab area.

The plurality of lower modules may be configured to, as a plurality of cutting guide members is provided on a lower side of each of the plurality of cut portions, form a cutting space where a cut film descends to each of the plurality of cutting guide members.

The pressing portion may include a film support protruding from the press-fit plate toward the lower plate, in which the film support may have a frame shape with a height corresponding to the minimum distance between the press-fit plate and the lower plate.

Additional aspects of embodiments will be set forth in part in the description which follows and, in part, will be apparent from the description, or may be learned by practice of the disclosure.

According to embodiments, a method of manufacturing an electrode notching mold for a secondary battery through grinding processing may manufacture the body of a notching mold in a state of being separated into a plurality of modules, thereby processing a cut surface formed on the inner side of the body by a grinding method.

In contrast, conventional notching mold manufacturing arts do not use a separate manufacturing method, so grinding may not be applied, and thus, a cut surface of a notching mold is formed by a wire cutting method with lower dimensional precision than a grinding method.

Therefore, a method of manufacturing an electrode notching mold for a secondary battery through grinding processing may manufacture a notching mold having dimensional precision higher than the conventional arts.

The effects of the method of manufacturing the electrode notching mold for the secondary battery through grinding processing according to an embodiment may not be limited to the above-mentioned effects, and other unmentioned effects may be clearly understood from the following description by one of ordinary skill in the art.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a flowchart illustrating a notching mold manufacturing method according to an embodiment;
FIG. 2 is a perspective view illustrating a notching mold according to an embodiment;
FIG. 3 is a perspective view illustrating a notching mold from which an upper plate is removed, according to an embodiment;
FIG. 4 is a perspective view illustrating a portion of a notching mold from which an interference-fit portion is removed, according to an embodiment; and
FIG. 5 is an exploded perspective view illustrating a coupling shape between a plurality of upper modules and an interference-fit portion, according to an embodiment.

### DETAILED DESCRIPTION

Hereinafter, embodiments will be described in detail with reference to the accompanying drawings. However, various alterations and modifications may be made to the embodiments. Here, the embodiments are not construed as limited to the disclosure. The embodiments should be understood to include all changes, equivalents, and replacements within the idea and the technical scope of the disclosure.

The terminology used herein is for the purpose of describing particular embodiments only and is not to be limiting of the embodiments. The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms including technical and scientific terms used herein have the same meaning as commonly understood by one of ordinary skill in the art to which the embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the embodiments with reference to the accompanying drawings, like reference numerals refer to like components regardless of drawing numbers and a repeated description related thereto will be omitted. In the description of embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. These terms are used only for the purpose of discriminating one constituent element from another constituent element, and the nature, the sequences, or the orders of the constituent elements are not limited by the terms. It should be noted that if one component is described as being "connected," "coupled" or "joined" to another component, the former may be directly "connected," "coupled," and "joined" to the latter or "connected", "coupled", and "joined" to the latter via another component.

A component, which has the same common function as a component included in any an embodiment, will be described by using the same name in other embodiments. Unless stated otherwise, the configuration described in any an embodiment may be applied to other embodiments, and repeated descriptions will be omitted.

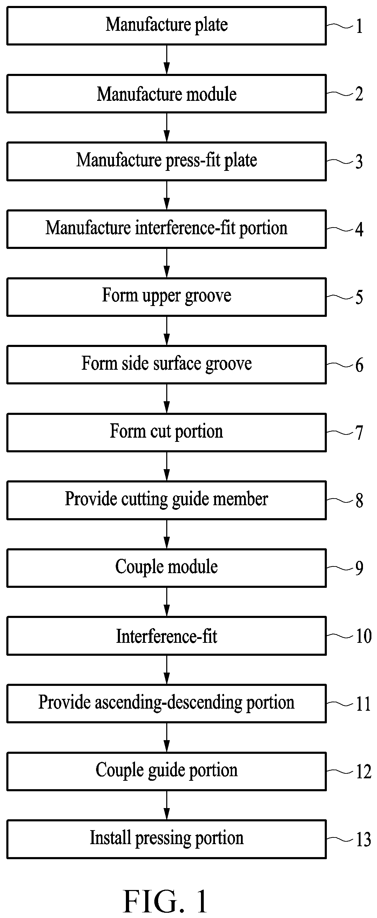

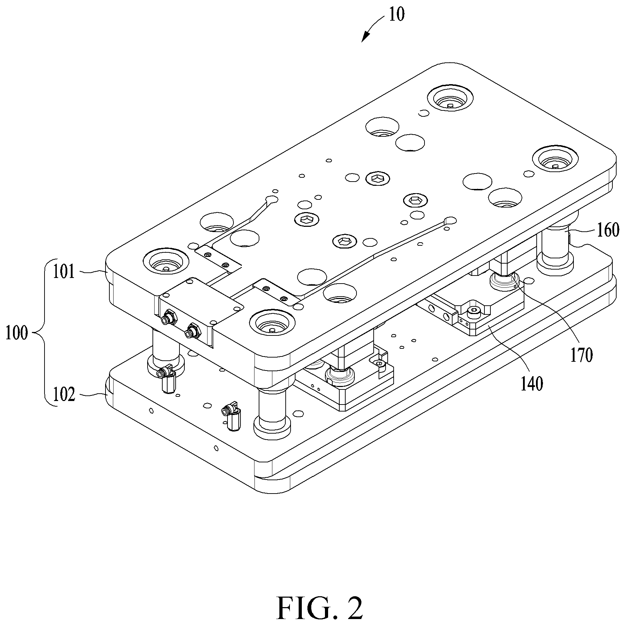

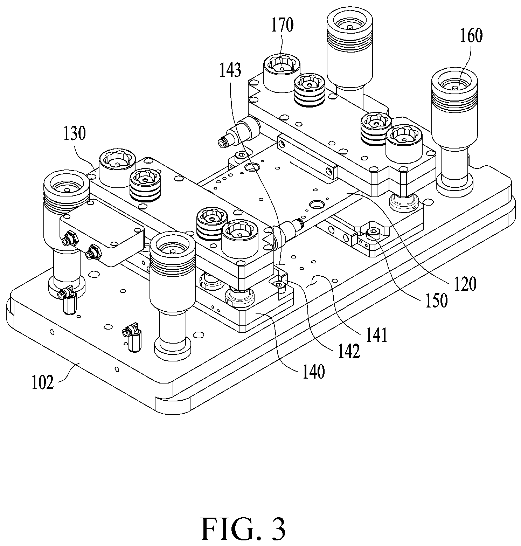

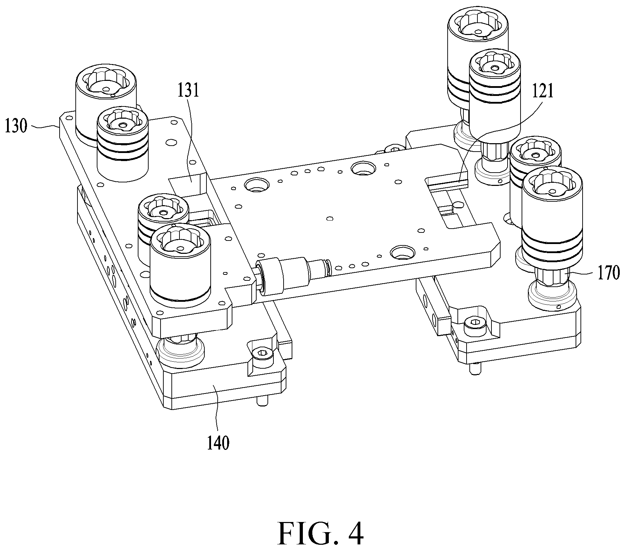

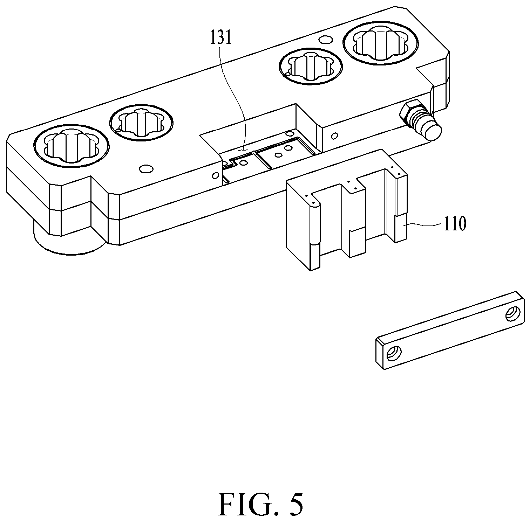

The embodiments are described with reference to the drawings below. FIG. 1 is a flowchart illustrating a notching mold manufacturing method, according to an embodiment, FIG. 2 is a perspective view illustrating a notching mold 10 according to an embodiment, FIG. 3 is a perspective view illustrating the notching mold 10 from which an upper plate 101 is removed, according to an embodiment, FIG. 4 is a perspective view illustrating a portion of the notching mold 10 from which an interference-fit portion 110 is removed, according to an embodiment, and FIG. 5 is an exploded perspective view illustrating a coupling shape between a plurality of upper modules 130 and the interference-fit portion 110, according to an embodiment.

The notching mold manufacturing method may include operation 1 of manufacturing a plate, operation 2 of manufacturing a module, operation 3 of manufacturing a press-fit plate, operation 4 of manufacturing an interference-fit portion, operation 5 of forming an upper groove, operation 6 of forming a side surface groove, operation 7 of forming a cut portion, operation 8 of providing a cutting guide member, operation 9 of coupling a module, operation 10 of interference-fitting, operation 11 of providing an ascending-descending portion, operation 12 of coupling a guide portion, and operation 13 of installing a pressing portion.

In operation 1 of manufacturing a plate, the upper plate 101 and a lower plate 102 may be manufactured by processing a plurality of plates in the form of a metal plate. Here, in operation 1 of manufacturing a plate, a plurality of holes in each of the upper plate 101 and the lower plate 102 may be opened in a state in which the upper plate 101 and the lower plate 102 are disposed in parallel. Specifically, the holes of the upper plate 101 and the holes of the lower plate 102 may be processed to be formed at positions where the holes of the upper plate 101 and the holes of the lower plate 102 face each other in pairs. Accordingly, the upper plate 101 and the lower plate 102 may allow a plurality of ascending-descending portions 160 and a plurality of pressing portions to be provided perpendicular to the upper plate 101 and the lower plate 102 without inclination, thereby increasing the processing precision.

In operation 2 of manufacturing a module, the plurality of upper modules 130, which is paired, and a plurality of lower modules 140, which is paired, may be manufactured by processing a plurality of metal plates into modules in the form of separate notching molds. This may be a configuration to enable grinding in operation 7 of forming a cut portion to be performed later by independently manufacturing each module.

In this case, the plurality of upper modules 130 and the plurality of lower modules 140, which are manufactured, may form the basic frame of a notching mold and may be manufactured such that a paired upper module and lower module may be manufactured to have facing surfaces corresponding to each other.

In operation 3 of manufacturing a press-fit plate, a press-fit plate 120 may be manufactured by rounding a metal plate. Through this, in operation 3 of manufacturing a press-fit plate, it may be possible to prevent the press-fit plate 120, which ascends or descends, from causing wear to other devices by allowing the edges of the press-fit plate 120 to form curved surfaces.

In operation 4 of manufacturing an interference-fit portion, the interference-fit portion 110 in a polyhedral frame shape may be manufactured in plurality by processing metal bloom. The plurality of interference-fit portions 110 may be members used to couple the plurality of upper modules 130 to the press-fit plate 120 and may enable easy separation and coupling by emitting a fastening member.

Furthermore, the material of the plurality of interference-fit portions 110 may be formed of a high-strength metal. For example, the plurality of interference-fit portions 110 may be typically formed of tool steel or reinforced stainless steel, a commonly used material, thereby providing high strength and wear resistance and minimizing deformation and wear even during repeated assembly and disassembly operations.

Additionally, it may be possible to further improve durability by performing additional heat treatment or coating process on the surfaces of the plurality of interference-fit portions 110.

In operation 5 of forming an upper groove, a plurality of upper grooves 131 to which the upper cross-sections of the plurality of interference-fit portions 110 are coupled by interference-fit may be formed in the lower portion of each of the plurality of upper modules 130. Here, in operation 5 of forming an upper groove, the surfaces of the plurality of upper grooves 131 may be processed so that the plurality of upper grooves 131 has interference-fit tolerance with the plurality of interference-fit portions 110. Through this, in operation 5 of forming an upper groove, the coupling strength between the plurality of upper modules 130 and the plurality of interference-fit portions 110 may be increased even though the fastening member is omitted, shaking or misalignment during a notching operation may be prevented, and high-precision cutting operations may be possible.

In operation 6 of forming a side surface groove, a plurality of side surface grooves 121 to which the side surface cross-sections of the plurality of interference-fit portions 110 are coupled by interference-fit may be formed on both ends of the press-fit plate 120. Here, in operation 6 of forming a side surface groove, the coupling strength may also be maximized by processing the plurality of side surface grooves 121 so that the plurality of side surface grooves 121 has interference-fit tolerance with the plurality of interference-fit portions 110.

In operation 6 of forming a side surface groove, the plurality of side surface grooves 121 in a flattened U shape that is recessed in a direction of the central axis of the press-fit plate 120 may be formed. Through this, in operation 6 of forming a side surface groove, the contact surface between the plurality of side surface grooves 121 and the plurality of interference-fit portions 110 may be maximized so that a phenomenon in which the plurality of upper modules 130 falls off from the press-fit plate 120 during notching processing may be prevented.

In operation 7 of forming a cut portion, a plurality of cut portions 150 in a blade shape may be formed by grinding one surface of each of the plurality of lower modules 140 in a state in which the plurality of lower modules 140 is separated. For example, in operation 7 of forming a cut portion, the plurality of cut portions 150 may be formed in each of the plurality of lower modules 140 by providing a grinding machine and grinding the plurality of lower modules 140 independently. Here, one surface of the plurality of lower modules 140 forming the plurality of cut portions 150 may be the inner side surface of the plurality of lower modules 140 forming a press-fit space 141 of films when each module is coupled to form a notching mold. Through this structure, the typical notching mold may form a blade on the inner side surface by discharging a wire that penetrates a plate or bloom. However, as described above, this may be a processing method that is difficult to secure high dimensional precision, and thus, the embodiment of the present disclosure may be configured to increase dimensional precision by grinding a mold in a state in which the mold is separated through operation 2 of manufacturing a module and operation 7 of forming a cut portion.

Here, in operation 7 of forming a cut portion, each of the plurality of cut portions 150 may be formed to have a width and a height smaller than each of the films, thereby cutting a portion of the films, except for an electrode tab area.

In operation 8 of providing a cutting guide member, a plurality of cutting guide members 142 may be provided on the lower side of each of the plurality of cut portions 150 in the plurality of lower modules 140, and a cutting space 143 where a cut film descends to each of the plurality of cutting guide members 142 may be formed. For example, in operation 2 of manufacturing a module, there may be a structure in which the cut film is received on the lower side of the plurality of cut portions 150 by providing the plurality of cutting guide members 142 having a frame shape and installing the plurality of cutting guide members 142 on the surface where the plurality of lower modules 140 face each other on the lower side of each of the plurality of cut portions 150. Accordingly, the plurality of cutting guide members 142 may prevent the films from being separated from a product by force generated during the cutting operation.

In operation 9 of coupling a module, the press-fit space 141 may be formed by a spaced distance by coupling the plurality of upper modules 130 to the lower surface of the upper plate 101 to be spaced apart from and facing each other and coupling the plurality of lower modules 140 to the upper surface of the lower plate 102 to be spaced apart from and facing each other. This may be to provide a space required to form an electrode tab on a film for a secondary battery pouch by coupling a plurality of modules, and the area of the press-fit space 141 may be changed simply by adjusting the separation distance between the paired modules. In addition, as illustrated in the drawing, in operation 9 of coupling a module, a flexible operation progress may be possible without being limited to a specific coupling order since a bolt is fastened to the outer surface of a plate when coupling each module to the plate.

Accordingly, the plurality of cut portions 150 may also be spaced apart from each other by the plurality of lower modules 140, which is spaced apart from and facing each other, using the central axis of the press-fit space 141 as a reference point. Through this, the plurality of cut portions 150 may have a structure in which only both ends of the films are cut through the blade edges of the plurality of cut portions 150 without cutting around the central axis of the films in addition to the electrode tab area. This may be the same as the shape of a mold in which a plurality of cavities is formed in a radial direction, so it may be possible to cut a portion of both surfaces of the films in one sweep and increase work efficiency. For reference, one or more of interference-fit coupling, bolt coupling, slide coupling, magnet coupling, and clamp coupling may be applied to the detachable coupling between each module and the plate.

In operation 10 of interference-fitting, the upper portion of each of the plurality of interference-fit portions 110 may be coupled by interference-fit to each of the plurality of upper grooves 131, and the side surface of each of the plurality of interference-fit portions 110 may be coupled by interference-fit to each of the plurality of side surface grooves 121. In this configuration, in operation 10 of interference-fitting, the plurality of interference-fit portions 110 may be coupled to the grooves corresponding to the cross-sections of the plurality of interference-fit portions 110, which are previously formed, so a structure in which the plurality of interference-fit portions 110 couples the plurality of upper modules 130 to the press-fit plate 120 may ultimately be formed. Through this, in operation 10 of interference-fitting, it may be possible to prevent the press-fit plate 120 and the plurality of upper modules 130 from colliding with each other by the driving members that provide driving force at the divided positions.

In operation 11 of providing an ascending-descending portion, an ascending-descending portion that is linearly driven may be provided in plurality between the upper plate 101 and the lower plate 102 in a state in which the upper plate 101 and the lower plate 102 are spaced apart from and facing each other. For example, in operation 11 of providing an ascending-descending portion, the plurality of ascending-descending portions 160 in a pillar shape may be provided, and the plurality of ascending-descending portions 160 may be installed to support the upper plate 101, so the upper plate 101 may ascend or descend. Here, in operation 11 of providing an ascending-descending portion, the upper plate 101 may be supported in a state in which the upper plate 101 is spaced apart from the lower plate 102 by a predetermined distance by installing the plurality of ascending-descending portions 160 at different positions and using the plurality of ascending-descending portions 160 in a pillar shape.

Furthermore, the linear driving method of the plurality of ascending-descending portions 160 may be formed in a telescopic shape and may have a motor or hydraulic-type driving member, thereby ascending or descending the upper plate 101 according to the adjustable length.

In operation 12 of coupling a guide portion, one end of a plurality of guide portions 170 having a pillar shape may be coupled to each of the plurality of lower modules 140, and the other end of each of the plurality of guide portions 170 may be provided to penetrate each of the plurality of upper modules 130. For example, in operation 12 of coupling a guide portion, the plurality of guide portions 170 in a pillar shape may be provided, and the length direction of each of the plurality of guide portions 170 may be installed to correspond to the plurality of ascending-descending portions 160, so the plurality of upper modules 130 may also follow the plurality of guide portions 170 and may ascend or descend together with the upper plate 101 when the upper plate 101 ascends or descends by the plurality of ascending-descending portions 160.

In operation 13 of installing a pressing portion, a pressing portion formed as a linear driving body may be installed on the press-fit plate 120 so that the press-fit plate 120 ascends or descends in the press-fit space 141.

More specifically, in operation 13 of installing a pressing portion, a film support protruding from the press-fit plate 120 toward the lower plate 102 may be included in the pressing portion.

The film support may have a frame shape with a height corresponding to the minimum distance between the press-fit plate 120 and the lower plate 102. This may be a configuration in which the film support fixes the films in an area where the plurality of cut portions 150 is not involved in the press-fit space 141, so the film support press-fits the lower plate 102 together with the films at the corresponding position, thereby preventing the central axis portion of the films from wrinkling by the force generated when both ends of the films are cut, thereby increasing the processing precision.

Hereinafter, an electrode notching mold for a secondary battery through grinding processing is described, and an example of the description provided above is omitted.

The electrode notching mold for the secondary battery through grinding processing may include a cover portion 100, the interference-fit portion 110, the press-fit plate 120, the plurality of upper modules 130, the plurality of lower modules 140, the plurality of cut portions 150, the plurality of ascending-descending portions 160, the plurality of guide portions 170, and the pressing portion.

The cover portion 100 may include the upper plate 101 in a plate shape and the lower plate 102 spaced apart from and facing the upper plate 101.

The interference-fit portion 110 may have a polyhedral frame shape.

The press-fit plate 120 may be manufactured by rounding a metal plate, and the plurality of side surface grooves 121 to which the side surface cross-section of the interference-fit portion 110 is coupled by interference-fit may be formed at both ends of the press-fit plate 120, respectively.

The press-fit plate 120 may have the plurality of side surface grooves 121 in a flattened U shape that is recessed in a direction of the central axis of the press-fit plate 120.

The plurality of upper modules 130 may be coupled to the upper plate 101, be spaced apart from and facing each other, and have a plate shape in which the plurality of upper grooves 131 to which the upper cross-section of the interference-fit portion 110 is coupled by interference-fit may be formed in the lower portion of the plurality of upper modules 130.

The plurality of lower modules 140 may be coupled in parallel to each of the plurality of upper modules 130 in the lower plate 102 and may form the press-fit space 141 between the plurality of lower modules 140 and the plurality of upper modules 130.

The plurality of lower modules 140 may form the cutting space 143 where a cut film descends to each of the plurality of cutting guide members 142 by providing the plurality of cutting guide members 142 on the lower side of each of the plurality of cut portions 150.

The plurality of cut portions 150 may be respectively formed on the facing surfaces of each of the plurality of lower modules 140 through grinding and may have an edge shape of a cutting blade.

Each of the plurality of cut portions 150 may be formed to have a width and a height smaller than each of the films and may cut a portion of the films, except for the electrode tab area.

The plurality of ascending-descending portions 160 may be formed to be linearly driven and be provided between the upper plate 101 and the lower plate 102 such that a driving direction is perpendicular to the upper surface of the lower plate 102.

The plurality of guide portions 170 may have a pillar shape, have one end provided in each of the plurality of lower modules 140, and have the other end penetrating the plurality of upper modules 130.

The pressing portion may be provided in the upper plate 101 and may press-fit the films to the upper surface of the lower plate 102 while descending toward the press-fit space 141. For reference, various forms capable of press-fitting the films may be applied to the pressing method used in the present disclosure, so a specific drawing of the pressing portion is omitted.

The pressing portion may include the film support protruding from the press-fit plate 120 toward the lower plate 102,

The film support may have a frame shape with a height corresponding to the minimum distance between the press-fit plate 120 and the lower plate 102.

In this embodiment, the method of manufacturing an electrode notching mold for a secondary battery through grinding processing may be manufactured in a state in which the body of a notching mold is separated into a plurality of modules so that a cut surface formed on the inner side of the body may be processed by a grinding method.

In contrast, conventional notching mold manufacturing arts do not use a separate manufacturing method, so grinding processing may not be applied, and thus, a cut surface of a notching mold may be formed by a wire cutting method, which has lower dimensional precision than the grinding method.

Accordingly, the method of manufacturing an electrode notching mold for a secondary battery through grinding processing may manufacture a notching mold having dimensional precision higher than the conventional arts.

While the embodiments are described with reference to drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order, and/or if components in a described system, architecture, device, or circuit are combined in a different manner, and/or rearranged or supplemented by other components or their equivalents.

Therefore, other implementations, other embodiments, and equivalents to the claims are also within the scope of the following claims.

## Claims

1. A method of manufacturing an electrode notching mold for a secondary battery through grinding processing, the method comprising:
manufacturing an upper plate and a lower plate by processing a plurality of plates in the form of a metal plate;
manufacturing a plurality of paired upper modules and a plurality of paired lower modules by processing a plurality of metal plates into modules in the form of separate notching molds;
manufacturing a press-fit plate by rounding a metal plate;
manufacturing a plurality of interference-fit portions in a polyhedral frame shape by processing metal bloom;
forming, in a lower portion of each of the plurality of paired upper modules, a plurality of upper grooves to which upper cross-sections of the plurality of interference-fit portions are coupled by interference-fit;
forming, on both ends of the press-fit plate, respectively, a plurality of side surface grooves to which side surface cross-sections of the plurality of interference-fit portions are coupled by interference-fit;
forming a plurality of cut portions in a blade shape by grinding one surface of each of the plurality of paired lower modules in a state in which the plurality of paired lower modules is separated;
module-coupling in which a press-fit space is formed by a spaced distance by coupling the plurality of paired upper modules to a lower surface of the upper plate to be spaced apart from and face each other and coupling the plurality of paired lower modules to an upper surface of the lower plate to be spaced apart from and face each other;
coupling by interference-fit an upper portion of each of the plurality of interference-fit portions to each of the plurality of upper grooves and coupling by interference-fit a side surface of each of the plurality of interference-fit portions to each of the plurality of side surface grooves;
providing a plurality of ascending-descending portions that is linearly driven between the upper plate and the lower plate in a state in which the upper plate and the lower plate are spaced apart from and facing each other;
guide portion-coupling in which one end of a plurality of guide portions having a pillar shape is coupled to each of the plurality of paired lower modules and another end of each of the plurality of guide portions penetrates each of the plurality of paired upper modules; and
installing a pressing portion formed as a linear driving body on the press-fit plate so that the press-fit plate ascends or descends in the press-fit space.

2. The method of claim 1, wherein the forming of the plurality of side surface grooves comprises forming the plurality of side surface grooves in a flattened U shape that is recessed in a direction of a central axis of the press-fit plate.

3. The method of claim 1, wherein the forming of the plurality of cut portions comprises forming each of the plurality of cut portions to have a width and a height smaller than each of films and cutting a portion of the films, except for an electrode tab area.

4. The method of claim 1, further comprising:
by providing a plurality of cutting guide members on a lower side of each of the plurality of cut portions in the plurality of paired lower modules, providing a cutting guide member in which a cutting space where a cut film descends to each of the plurality of cutting guide members is formed.

5. The method of claim 1, wherein the pressing portion comprises a film support protruding from the press-fit plate toward the lower plate, and
wherein the film support has a frame shape with a height corresponding to a minimum distance between the press-fit plate and the lower plate.

6. An electrode notching mold for a secondary battery through grinding processing, the electrode notching mold comprising:
a cover portion comprising an upper plate in a plate shape and a lower plate spaced apart from and facing the upper plate;
an interference-fit portion in a polyhedral frame shape;
a press-fit plate manufactured by rounding a metal plate and having, on both ends of the press-fit plate, respectively, a plurality of side surface grooves to which a side cross-section of the interference-fit portion is coupled by interference-fit;
a plurality of upper modules coupled to the upper plate, spaced apart from and facing each other, and having a plate shape in which a plurality of upper grooves to which an upper cross-section of the interference-fit portion is coupled by interference-fit is formed in a lower portion of the plurality of upper modules;
a plurality of lower modules coupled in parallel to each of the plurality of upper modules in the lower plate and configured to form a press-fit space between the plurality of lower modules and the plurality of upper modules;
a plurality of cut portions respectively formed on facing surfaces of each of the plurality of lower modules by grinding and having an edge shape of a cutting blade;
a plurality of ascending-descending portions formed to be driven linearly and provided between the upper plate and the lower plate such that a driving direction is perpendicular to an upper surface of the lower plate;
a plurality of guide portions having a pillar shape, having one end provided in each of the plurality of lower modules, and having another end penetrating each of the plurality of upper modules; and
a pressing portion provided in the upper plate and configured to press-fit films to the upper surface of the lower plate while descending toward the press-fit space.

7. The electrode notching mold of claim 6, wherein the press-fit plate is configured to form the plurality of side surface grooves in a flattened U shape that is recessed in a direction of a central axis of the press-fit plate.

8. The electrode notching mold of claim 6, wherein each of the plurality of cut portions is formed to have a width and a height smaller than each of the films and configured to cut a portion of the films, except for an electrode tab area.

9. The electrode notching mold of claim 6, wherein the plurality of lower modules is configured to, as a plurality of cutting guide members is provided on a lower side of each of the plurality of cut portions, form a cutting space where a cut film descends to each of the plurality of cutting guide members.

10. The electrode notching mold of claim 6, wherein the pressing portion comprises a film support protruding from the press-fit plate toward the lower plate, and
wherein the film support has a frame shape with a height corresponding to a minimum distance between the press-fit plate and the lower plate.
